# EUROPÄISCHE PATENTSCHRIFT

(11) **EP 4 186 136 B1**
(45) Veröffentlichungstag und Bekanntmachung des Hinweises auf die Patenterteilung: **09.12.2026**
(21) Anmeldenummer: 21743477.8
(22) Anmeldetag: 13.07.2021
(51) Int. Cl.: H02J 3/38, H02J 9/06, H02J 3/32

(54) **WECHSELRICHTER MIT BISTABILER SCHALTEINHEIT**
INVERTER HAVING A BISTABLE SWITCHING UNIT
ONDULEUR À UNITÉ DE COMMUTATION BISTABLE

(30) Priorität: 23.07.2020 DE 102020119481
(43) Veröffentlichungstag der Anmeldung: 31.05.2023
(73) Patentinhaber: SMA Solar Technology AG, 34266 Niestetal (DE)
(72) Erfinder: ALLERT, Claus, 34260 Kaufungen (DE)
(86) Internationale Anmeldenummer: PCT/EP2021/069397
(87) Internationale Veröffentlichungsnummer: WO 2022/017860

(56) Entgegenhaltungen:
- EP-A1- 2 717 412
- US-A1- 2011 175 565
- US-A1- 2014 088 777
- US-A1- 2017 302 081

## Beschreibung

### TECHNISCHES GEBIET DER ERFINDUNG

Die Erfindung betrifft einen Wechselrichter mit Anschlüssen zu einer elektrischen Speichereinheit, zumindest einem Verbraucher und zu einem übergeordneten Verteilnetz, wobei der Wechselrichter eine bidirektionale Wechselrichterbrücke und eine Reihenschaltung aus zwei Schalteinheiten umfasst.

### STAND DER TECHNIK

Wechselrichter sind leistungselektronische Geräte, die zur Umwandlung zwischen einem Gleichstrom und einem Wechselstrom eingerichtet sind. Insbesondere sind Wechselrichter bekannt, die elektrische Leistung einer Gleichstromquelle, beispielsweise eines Photovoltaik-Generators, in ein Wechselspannungsnetz einspeisen können, oder elektrische Leistung zwischen einem Gleichstromspeicher, beispielsweise einer Batterie, und einem Wechselspannungsnetz bidirektional austauschen können.

Bekannt sind auch sogenannte Notstrom-, Ersatzstrom oder Backup-Systeme, die angeschlossene Verbraucher bei Netzausfall absichern. Dazu sind eine Reihe an Schalthandlungen auszuführen, beispielsweise eine Trennung vom Netz, das Aufstarten eines Netzbildners und dessen Aufschaltung auf die Versorgungsleitungen zu den Verbrauchern. Des Weiteren muss der Zustand des Netzes überwacht werden, um beispielsweise bei Rückkehr des Netzes eine Synchronisation eventuell vorhandener lokaler Erzeuger einzuleiten und um die Anlage wieder mit dem Netz verbinden zu können. Diese und viele weitere Anforderungen sind zu erfüllen, wobei deren Erfüllung in verschiedenen Ländern in unterschiedlichsten Richtlinien, Normen und Standards reguliert ist.

Die Erfindung betrifft besonders kleinere Ersatzstromanlagen, mit denen nur wenige Lasten versorgt werden sollen. Solche Ersatzstromanlagen kommen insbesondere in übergeordneten Verteilnetzen zum Einsatz, die eine hohe Stabilität besitzen, was bedeutet, dass die übergeordneten Verteilnetze zu mehr als 90% der Zeit störungsfrei die Versorgung der Lasten gewährleisten. Umgekehrt bedeutet dies, dass derart vorgehaltene Ersatzstromanlagen zwar dauernd betriebsbereit gehalten werden, aber nur sehr selten zum Einsatz kommen. Üblicherweise umfasst die Ersatzstromanlage, meist der enthaltene Wechselrichter, eine Steuerung, die sowohl den Zustand des Netzes überwacht als auch die Schalter zur Umschaltung von Netzbetrieb auf Ersatzstrombetrieb ansteuert.

Meist werden aus Sicherheitsgründen im Ruhezustand offene Schalter verwendet, sog. normal-geöffnete Schalter (engl. "normally-open"), oft auch integriert in den Wechselrichter. Diese Lösung bringt aber den Nachteil mit sich, dass diese Schalter in stabilen Netzen zu 98% oder mehr der Zeiten aktiv geschlossen gehalten werden müssen, was einen erheblichen Energiebedarf verursacht. Dies wiegt umso schwerer bei kleinen Anlagen, wo beispielsweise nur ein Verbraucher für den Netzfehlerfall, der zudem unter Umständen nur sehr selten vorkommt, abgesichert werden soll.

Eine Schaltungsanordnung mit einem bistabilen Relais zwischen einem Netz und einem Wechselrichter ist aus der EP 2 141 781 B1 der Anmelderin bekannt, wobei die Energie für das sicherheitsrelevante Ausschalten des Relais durch einen vorgeladenen Kondensator gewährleistet wird.

Die Druckschrift DE 10 2010 000502 A1 offenbart eine Netzersatzanlage zum Anschluss an ein Versorgungsnetz mit einer TT-Netz Topologie. Die Netzersatzanlage umfasst eine Steuereinrichtung, eine Umschalteinrichtung, einen PV-Wechselrichter, einen Verbraucher, einen dem Verbraucher vorgeschalteten Fehlerstromschutzschalter, einen Batteriewechselrichter und einen Generator. Dabei weist die Umschalteinrichtung einen elektrischen Widerstand R_{N-PE} auf, der eine elektrische Verbindung zwischen einem lokalen PE-Potential und einem N-Potential derart herstellt, dass ein in einem Fehlerfall fließender Fehlerstrom zu einer vorschriftsmäßigen Abschaltung des Verbrauchers durch den Fehlerstromschutzschalter führt.

Die Druckschrift DE 10 2018 130453 A1 offenbart ein Verfahren zur elektrischen Versorgung eines Wechselrichters mit einer Wechselspannung. Der Wechselrichter umfasst einen AC-Ausgang zum Anschluss eines AC-Netzes, einen DC-Eingang zum Anschluss einer DC-Quelle, einen DC/AC-Wandler und eine Steuerungseinheit zur Steuerung des DC/AC-Wandlers. Die Steuerungseinheit ist mit einer Schalteinheit verbunden, über welche die Steuerungseinheit in einem ersten Schaltzustand über das AC-Netz und in einem zweiten Schaltzustand über eine eine Wechselspannung bereitstellende Hilfsenergiequelle versorgt wird. Der Wechselrichter weist ferner eine Netzüberwachungseinheit zur Detektion einer in dem AC-Netz vorliegenden Wechselspannung auf. Bei dem Verfahren wird die Schalteinheit in dem zweiten Schaltzustand betrieben, wenn eine von der Netzüberwachungseinheit detektierte Eigenschaft der in dem AC-Netz herrschenden Wechselspannung vorgegebenen Kriterien nicht genügt. Hingegen wird die Schalteinheit in dem ersten Schaltzustand betrieben, wenn eine von der Netzüberwachungseinheit detektierte Eigenschaft der in dem AC-Netz herrschenden Wechselspannung den vorgegebenen Kriterien genügt.

Die Druckschrift EP 2717412 A1 offenbart ein Energieverteilungssystem umfassend einen Leistungswandler zur Umwandlung von Gleichstrom eines Photovoltaik-Generators in Wechselstrom und Ausgabe des Wechselstroms, einen Energiespeicher, und eine Lade-/Entlade-Einheit zum Laden des Energiespeichers. Die Lade-/Entlade Einheit ist ausgelegt, die Energie aus dem Energiespeicher in Wechselstrom umzuwandeln und den Wechselstrom auszugeben. Der Leistungswandler ist dazu eingerichtet, während eines normalen Zustandes, in dem Wechselstrom von einem kommerziellen Energieversorgungsnetz bereitgestellt wird, einen netzgekoppelten Betrieb durchzuführen. Der Leistungswandler ist zudem ausgelegt, während eines Stromausfalles, in dem die elektrische Versorgung durch das kommerzielle Energieversorgungsnetz unterbrochen ist, einen netzunabhängigen Betrieb durchzuführen. Die Lade-/Entlade-Einheit ist in dem netzunabhängigen Betrieb dazu ausgelegt, den Energiespeicher mit Wechselstromleistung des Leistungswandlers zu laden, oder die von dem Leistungswandler bereitgestellte Wechselstromleistung als elektrische Versorgung an ein Gerät zu liefern.

Die Druckschrift US 2011/175565 A1 offenbart ein Energiespeichersystem umfassend einen Leistungswandler zur Umwandlung von Gleichstrom einer Photovoltaik-Generators in Wechselstrom und Ausgabe des Wechselstroms, einen Energiespeicher in Form einer Batterieeinheit und einen Gleichspannungswandler zum Laden und Entladen der Batterieeinheit. Zur Bereitstellung von Wechselstrom aus einem Netz und zur Umschaltung zur Energieversorgung einer Last aus dem Netz zu einer Energieversorgung aus den angeschlossenen Geleichspannungsquellen sind zwei Schalteinheiten vorgesehen, wobei die zweite Schalteinheit bistabil ausgeführt ist und in einen stabilen offenen Zustand und in einem stabilen, geschlossenen Zustand geschaltet werden kann, in Abhängigkeit des Schaltzustands des ersten Schalters, und somit Überspannungen und Unterspannungen während der Umschaltung entgegenwirkt.

### AUFGABE DER ERFINDUNG

Es besteht Bedarf nach Ersatzstromanlagen, insbesondere zur Verwendung in stabilen Netzen, die klein und kostengünstig ausgeführt werden können und auch im Bereitschaftsmodus (stand-by Betrieb) wenig Kosten verursachen.

### LÖSUNG

Die Aufgabe wird durch einen Wechselrichter mit den Merkmalen des Patentanspruchs 1 sowie ein Verfahren mit den Merkmalen des Patentanspruchs 11 gelöst. Bevorzugte Ausführungsformen sind in den abhängigen Patentansprüchen angegeben.

### BESCHREIBUNG DER ERFINDUNG

Ein erfindungsgemäßer Wechselrichter umfasst einen Batterieanschluss zum Anschluss zumindest einer elektrischen Speichereinheit, wie z. B. einer Batterie, einen Lastanschluss zum Anschluss einer Last, z. B. zumindest eines Verbrauchers von elektrischer Energie, und einen Netzanschluss zur Verbindung mit einem übergeordneten Wechselstrom-Verteilnetz, im Folgenden auch Verteilnetz genannt. Der Wechselrichter umfasst auch eine bidirektionale Wechselrichterbrücke, die auf ihrer Gleichstromseite mit dem Batterieanschluss verbunden ist. Des Weiteren umfasst der erfindungsgemäße Wechselrichter eine Reihenschaltung einer ersten Schalteinheit und einer zweiten Schalteinheit, wobei die erste Schalteinheit zwischen der Wechselstromseite der bidirektionalen Wechselrichterbrücke und der zweiten Schalteinheit angeordnet ist und die zweite Schalteinheit zwischen der ersten Schalteinheit und dem Netzanschluss angeordnet ist. Die erste Schalteinheit ist eingerichtet, ohne einen Haltestrom in einen ersten Zustand zu fallen und mit Haltestrom in einen zweiten Zustand zu schalten. Die zweite Schalteinheit besitzt mehrere stabile Zustände und ist eingerichtet, durch ein Signal von einem Zustand in den anderen Zustand umgeschaltet zu werden, wobei die erste Schalteinheit im ersten Zustand geöffnet ist und im zweiten Zustand geschlossen ist und die zweite Schalteinheit als bistabile Schalteinheit ausgeführt ist, die ohne Signal in einem vorherigen Zustand verbleibt. Dabei ist der Lastanschluss des Wechselrichters mit Anschlusspunkten verbunden, die zwischen der ersten Schalteinheit und der zweiten Schalteinheit angeordnet sind.

Es wird die Schaltfunktion zwischen Wechselrichterbrücke und Verteilnetz durch zwei in Serie geschaltete Schalter redundant ausgeführt. Damit wird gewährleistet, dass auch bei Fehlfunktion eines Schalters die Netztrennung sicher noch mit dem anderen Schalter durchgeführt werden kann. Es ist hier einer der Schalter durch eine Schalteinheit ausgeführt, die eingerichtet ist, durch ein Signal umgeschaltet zu werden, was bedeutet, dass die Schalteinheit mehrere stabile Zustände besitzen kann, wobei der Übergang von einem Zustand in den anderen Zustand durch ein Signal ausgelöst werden kann. Ist hingegen einer der stabilen Zustände erreicht, so bleibt die zweite Schalteinheit von sich aus und unter Abwesenheit eines Signals in dem jeweils vorliegenden stabilen Zustand. Ein solches Signal kann beispielsweise von einer Steuerung des Wechselrichters bereitgestellt werden. Bei der ersten Schalteinheit wird der zweite Zustand aktiv über einen Haltestrom und somit unter Erzeugung von Verlustenergie beibehalten. Hingegen fällt sie von sich aus in ihren ersten Zustand und behält diesen bei, ohne dabei Verlustenergie zu erzeugen. Das Verhalten der ersten Schalteinheit entspricht daher dem einer monostabilen Schalteinheit. Demgegenüber kann bei der zweiten Schalteinheit jeder der stabilen Zustände von sich aus beibehalten werden, ohne dass die zweite Schalteinheit dabei eine Verlustenergie erzeugt. Ein Signal und eine damit verbundene Verlustenergie ist bei der zweiten Schalteinheit lediglich für einen Wechsel zwischen zwei verschiedenen stabilen Zuständen erforderlich. Das Verhalten der zweiten Schalteinheit entspricht dem Verhalten einer mehrfach-stabilen, zum Beispiel einer bistabilen Schalteinheit.

Erfindungsgemäß ist die erste Schalteinheit des Wechselrichters im ersten Zustand geöffnet und im zweiten Zustand geschlossen. Dies wird auch als "normal offene" Schalteinheit bezeichnet. Die erste Schalteinheit kann damit als normal-geöffneter Schalter ausgeführt sein und die zweite Schalteinheit ist als bistabile Schalteinheit ausgeführt, die ohne Signal in einem vorherigen Zustand verbleibt. Auf diese Weise kann die zweite Schalteinheit zwischen einem geöffneten und geschlossenen Zustand durch das Anlegen eines Signales geschaltet werden. Dieses Signal kann eine nur kurze Dauer aufweisen, was bedeutet, dass für die Umschaltung nur wenig Energie aufgewendet werden muss. Der Wechselrichter weist damit eine bidirektionale Wechselrichterbrücke und eine Reihenschaltung aus einer monostabilen Schalteinheit und einer bistabilen Schalteinheit auf. Bevorzugt weist der Wechselrichter eine Steuerung auf, die eingerichtet ist, das Signal zur Umschaltung der zweiten Schalteinheit zu generieren.

Eine mehrfach-stabile, insbesondere bistabile Schalteinheit ist relativ zu einer monostabilen Schalteinheit zwar üblicherweise teurer in der Anschaffung, dafür aber mit einem geringeren Energieverlust im Betrieb der Schalteinheit verbunden. Bei den in Frage stehenden Wechselrichtern hat sich nun gezeigt, dass ein optimaler Kompromiss aus Energieeinsparung im Betrieb und geringen Herstellungskosten dadurch entsteht, wenn die erste Schalteinheit als monostabile Schalteinheit und die zweite Schalteinheit als mehrfach-stabile, insbesondere bistabile Schalteinheit ausgelegt ist. So ist es mit der als mehrfachstabil oder bistabil ausgelegten zweiten Schalteinheit möglich, an den Lastanschluss angeschlossene Verbraucher ohne durch die Schalteinheit erzeugte Verlustenergie, oder mit einer lediglich vernachlässigbaren durch die Schalteinheit erzeugten Verlustenergie für eine längere Zeitdauer mit dem Verteilnetz zu verbinden. Dies ist gerade bei starken Verteilnetzen, die nur geringfügige Netzausfälle aufweisen, zu einem überwiegenden Teil der Zeit der Fall.

Die erfindungsgemäße Auslegung der Schalteinheiten, nämlich die erste Schalteinheit als monostabile Schalteinheit und die zweite Schalteinheit als mehrfach-stabile, insbesondere bistabile Schalteinheit auszulegen, erlaubt es auch, den DC/AC-Wandler zeitweise vom Verteilnetz zu trennen und zur weiteren Energieeinsparung in einen Ruhemodus zu versetzen. Dies kann beispielsweise dann erfolgen, wenn die angeschlossene Batterie gerade leer oder vollgeladen ist, oder ein DC-seitig an den Wechselrichter angeschlossener PV-Generator aktuell keine elektrische Leistung erzeugt. Durch die Herbeiführung des Ruhemodus für den Wechselrichter fällt die erste Schalteinheit von sich aus in ihren ersten Zustand, also ihren geöffneten Zustand. Dabei können weiterhin die an den Lastanschluss angeschlossenen Verbraucher bei geschlossener zweiter Schalteinheit von dem Verteilnetz versorgt werden, ohne dass dabei die zweite Schalteinheit zur Beibehaltung ihres geschlossenen Zustandes eine Verlustenergie erzeugen würde.

In einer Weiterbildung der Erfindung kann eine sogenannte "Ein-Fehler-Sicherheit" realisiert werden. Die "Ein-Fehler-Sicherheit" entspricht dabei der Anforderung, dass ein einzelner Fehler nicht zum Verlust der Sicherheitsfunktion führen darf. Hierfür wird die korrekte Funktion der zweiten Schalteinheit durch die Steuerung des Wechselrichters überwacht. Die Überwachung kann dabei z.B. durch Spannungsmessung zwischen erster und zweiter Schalteinheit erfolgen. Bei Fehlfunktion der zweiten Schalteinheit kann die Steuerung des Wechselrichters die Netztrennung durch Ansteuern der ersten Schalteinheit durchführen. Falls die Steuerung ausfällt, wird die erste Schalteinheit automatisch geöffnet, da die erste Schalteinheit als normal-geöffneter Schalter ausgeführt ist. Damit kann eine sichere Netztrennung bei Auftreten eines Fehlers realisiert werden.

In einer Ausführungsform weist der Wechselrichter ferner eine Netzüberwachungseinheit oder eine Schnittstelle zum Anschluss einer Netzüberwachungseinheit auf. Die Netzüberwachungseinheit ist eingerichtet, Netzparameter der übergeordneten Verteilnetzes zu messen und mit der Steuerung in kommunikativer Verbindung zu stehen. Die Steuerung ist eingerichtet, mit der Netzüberwachungseinheit in kommunikativer Verbindung zu stehen, und von der Netzüberwachungseinheit Netzparameter des übergeordneten Verteilnetzes zu empfangen. Die Netzüberwachungseinheit kann in dem Wechselrichter enthalten sein oder als separate Einheit ausgeführt sein. Sie ist eingerichtet, die Netzparameter am Netzanschluss oder in der Nähe des Netzanschlusses zu messen. Die Messung in der Nähe des Netzanschlusses erfolgt bevorzugt außerhalb des Wechselrichters.

In einer Ausführungsform ist die Steuerung eingerichtet, bei Ausfall des übergeordneten Verteilnetzes, detektiert durch von der Netzüberwachungseinheit empfangene Netzparameter, das Signal zur Umschaltung der zweiten Schalteinheit in den geöffneten Zustand zu generieren. Damit wird der Wechselrichter vom übergeordneten Verteilnetz getrennt. Falls die zweite Schalteinheit vor dem Empfang des Signals zur Umschaltung bereits geöffnet war, so bleibt die zweite Schalteinheit im geöffneten Zustand.

An den Lastanschluss kann ein oder können mehrere Verbraucher von elektrischer Energie angeschlossen werden. Diese Verbraucher sollen im Falle eines Netzausfalles aus der angeschlossenen elektrischen Speichereinheit, z. B. der wiederaufladbaren Batterie, über den Wechselrichter mit Energie versorgt werden. Alternativ oder zusätzlich sollen die Verbraucher im Falle eines Netzausfalles aus einem Generator, z. B. einem Photovoltaik-Generator, mit Energie versorgt werden. Der Generator kann dabei an dem Batterieanschluss oder den Anschlusspunkten angeschlossen sein. Die Versorgung des Verbrauchers oder der Verbraucher aus dem Generator kann über den Wechselrichter oder direkt oder über einen weiteren Spannungswandler erfolgen.

Da die Anschlusspunkte zwischen der ersten Schalteinheit und der zweiten Schalteinheit angeordnet sind, lässt sich eine Verbindung zwischen den an dem Lastanschluss angeschlossenen Verbrauchern und dem Verteilnetz mittels der zweiten Schalteinheit herstellen. Bei fehlerfreier Funktion des übergeordneten Verteilnetzes kann die zweite Schalteinheit beispielsweise mit einem kurzen Schaltimpuls geschlossen werden, sofern sie nicht ohnehin schon geschlossen ist, und die Verbraucher können aus dem Verteilnetz versorgt werden. So wird durch den erfindungsgemäßen Wechselrichter insbesondere in sehr stabilen Verteilnetzen Energie eingespart.

Der Wechselrichter ist zur Versorgung des angeschlossenen Verbrauchers im Falle eines Netzausfalles eingerichtet, das heißt er ist ausgelegt, ein lokales Inselnetz aufzubauen. Dies ist insbesondere bei Ausfall des übergeordneten Verteilnetzes wichtig. Ein lokales Inselnetz ist ein lokal abgegrenztes Energieversorgungsnetz, das ein räumlich enges Gebiet versorgt und in der Regel lokal, d. h. ohne direkten elektrischen Anschluss zu anderen Energieversorgungsnetzen betrieben wird.

In einer Ausführungsform ist die Steuerung eingerichtet, ein Lebenszeichensignal bereitzustellen und an die zweite Schalteinheit zu senden. Dies ermöglicht die Realisierung eines Sicherheitsfeatures, indem der zweiten Schalteinheit mitgeteilt wird, dass die Steuerung in Ordnung ist und korrekt funktioniert. Das Lebenszeichensignal kann z. B. ein Potential "high" oder ein gepulstes Signal sein.

In einer Ausführungsform ist die zweite Schalteinheit eingerichtet, in den geschlossenen Zustand zu schalten, wenn sie das Lebenszeichensignal erhält, insbesondere ist die zweite Schalteinheit eingerichtet, nur dann in den geschlossenen Zustand zu schalten, wenn sie das Lebenszeichensignal erhält. Dies ermöglicht die Erhöhung der Sicherheit, da die Last des Wechselrichters dann mit dem übergeordneten Verteilnetz verbunden wird, wenn die Steuerung des Wechselrichters in Ordnung ist und dies durch das Lebenszeichensignal mitteilt.

Insbesondere wird z. B. die Implementierung der "Ein-Fehler-Sicherheit" ermöglicht. Der Wechselrichter überwacht mittels der Netzüberwachungseinheit das Verteilnetz und schaltet die Last, z. B. die Verbraucher, an das übergeordnete Verteilnetz. Die Netzqualität wird überwacht, wodurch z. B. ein Ausfall des Verteilnetzes festgestellt werden kann. Die zweite Schalteinheit trennt die Last vom Verteilnetz, wenn sie aktiv durch die Steuerung, z.B. wegen schlechter Netzqualität, in den offenen Zustand geschaltet wird oder wenn nicht sicher ist, dass die Steuerung korrekt funktioniert, das heißt, wenn z. B. Lebenszeichensignal fehlt. Bei den erwähnten beiden Signalen an die zweite Schalteinheit kann es sich um zwei getrennte Signale handeln oder es kann sich um das gleiche Signal handeln, das beide Informationen zusammenfasst.

In einer Ausführungsform ist die zweite Schalteinheit konfigurierbar, wobei die zweite Schalteinheit eine Ansteuerschaltung umfasst, die eingerichtet ist, Konfigurationssignale zu empfangen und mittels der Konfigurationssignale die zweite Schalteinheit zu konfigurieren. Durch die Konfigurationssignale können z. B. bestimmte Zustände der zweiten Schalteinheit gezielt ausgelöst werden.

Bevorzugt ist die Ansteuerschaltung eingerichtet, die Konfigurationssignale von der Steuerung zu empfangen, wobei die Steuerung ihrerseits eingerichtet ist, die Konfigurationssignale an die Ansteuerschaltung zu senden. In Ausführungsformen können die Konfigurationssignale einen oder mehrere der folgenden Zustände der zweiten Schalteinheit ggf. in Reaktion auf spezifische Ereignisse auslösen:
- die zweite Schalteinheit verbleibt im geschlossenen Zustand;
- die zweite Schalteinheit verbleibt im geöffneten Zustand;
- die zweite Schalteinheit schaltet in den geöffneten Zustand, wenn sie kein Lebenszeichensignal erhält.

Eine zweite Schalteinheit, die in den geöffneten Zustand schaltet, wenn sie kein Lebenszeichensignal erhält, könnte beispielhaft so realisiert werden wie in EP 2 141 781 B1 Abschnitt [0016] beschrieben.

Ein weiterer möglicher konfigurierbarer Zustand ist, dass die zweite Schalteinheit im geschlossenen Zustand verbleibt, auch wenn das Lebenszeichensignal fehlt. Dies kann sinnvoll sein, wenn der Wechselrichter ausgeschaltet wird, weil z. B. die Batterie leer ist, und die Last somit mit dem übergeordneten Verteilnetz verbunden bleiben soll.

Ein weiterer möglicher konfigurierbarer Zustand ist, dass die zweite Schalteinheit auch unabhängig vom Netzzustand und/oder einem Lebenszeichensignal im geöffneten Zustand verbleibt. Damit kann die Last vom übergeordneten Verteilnetz getrennt bleiben.

Die Erfindung ermöglicht somit eine einfache und energiesparende Realisierung von verschiedenen Betriebszuständen des Wechselrichters über die verschiedenen Schalterstellungen der ersten und zweiten Schaltereinheit.

In einer Ausführungsform weist der Wechselrichter einen Generatoranschluss zum Anschluss eines Generators zur Erzeugung von elektrischer Energie auf. Der Generatoranschluss kann direkt oder über einen DC-DC-Wandler mit der DC-Seite der Wechselrichterbrücke verbunden sein. Der Generatoranschluss kann damit z. B. mit dem Batterieanschluss übereinstimmen. Der Generatoranschluss kann auch auf der AC-Seite angekoppelt sein und z. B. an den Anschlusspunkten angebunden sein. Bei einem Ausfall des übergeordneten Verteilnetzes kann die Last somit über den Generator mit elektrischer Energie versorgt werden.

Ein Verfahren zur Versorgung zumindest eines Verbrauchers, angeschlossen an einen Lastanschluss eines Wechselrichters, mit elektrischer Energie, weist die folgenden Schritte auf:
eine Netzüberwachungseinheit detektiert den Zustand des an dem Netzanschluss angeschlossenen übergeordneten Verteilnetzes und meldet einen Ausfall an die Steuerung des Wechselrichters,
und bei Ausfall des übergeordneten Verteilnetzes: generiert die Steuerung ein Signal zur Umschaltung der zweiten Schalteinheit in den geöffneten Zustand,
woraufhin im nächsten Schritt, die zweite Schalteinheit geöffnet wird.

Optional wird dann die erste Schalteinheit geschlossen oder bleibt geschlossen. Ist die erste Schalteinheit bereits geschlossen, so bleibt sie geschlossen. Ist die erste Schalteinheit geöffnet, so wird sie geschlossen.

Ein Ausfall des Verteilnetzes bedeutet in diesem Zusammenhang eine so weitgehende Beeinträchtigung von Netzparametern, dass eine sichere Versorgung des Verbrauchers oder der Verbraucher nicht mehr gewährleistet ist.

In einer Ausführungsform des Verfahrens baut bei Ausfall des übergeordneten Verteilnetzes die bidirektionale Wechselrichterbrücke ein lokales Inselnetz auf und der zumindest eine an den Lastanschluss angeschlossene Verbraucher wird über den Wechselrichter mit elektrischer Energie versorgt. Die elektrische Energie kann dabei aus einem an den Wechselrichter angeschlossenen elektrischen Energiespeicher und/oder aus einem an den Wechselrichter angeschlossenen Generator bezogen werden.

Durch das Verfahren wird es ermöglicht, den Wechselrichter bei Bedarf vom übergeordneten Verteilnetz zu trennen und die Last über ein durch den Wechselrichter aufgebautes Inselnetz mit elektrischer Energie zu versorgen.

### KURZBESCHREIBUNG DER FIGUREN

Im Folgenden wird die Erfindung anhand in den Figuren dargestellter Ausführungsbeispiele weiter erläutert und beschrieben.
- Fig. 1: zeigt schematisch eine Ausführungsform eines Wechselrichters,
- Fig. 2: zeigt schematisch ein Verfahren zur Versorgung zumindest eines Verbrauchers mit elektrischer Energie.

### FIGUREN BESCHREIBUNG

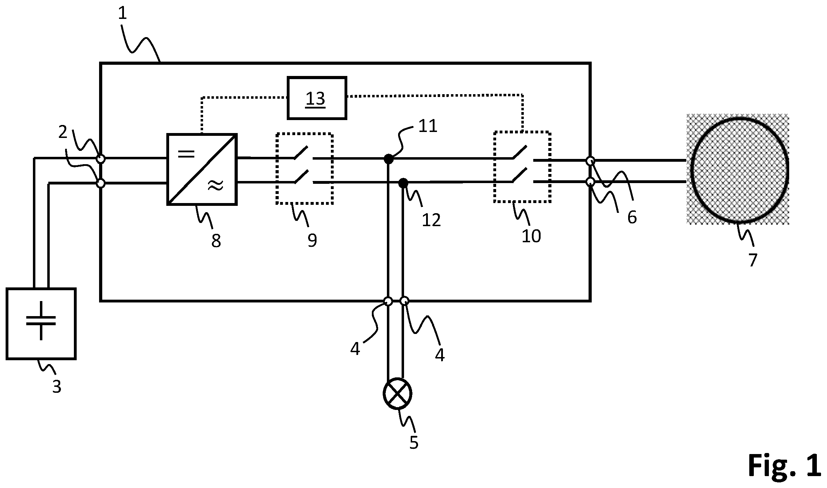

Fig. 1 zeigt einen Wechselrichter 1 mit einem Batterieanschluss 2 und daran angeschlossener elektrischer Speichereinheit 3, z. B. einer wiederaufladbaren Batterie. An einem Lastanschluss 4 ist ein Verbraucher 5 angeschlossen. An dem Lastanschluss können auch mehrere Verbraucher 5 angeschlossen werden. Fig. 1 zeigt weiter, dass der Wechselrichter 1 über einen Netzanschluss 6 mit einem übergeordneten Verteilnetz 7 verbunden ist. Der Wechselrichter 1 weist weiter eine Wechselrichterbrücke 8 auf, die auf ihrer Gleichstromseite mit dem Batterieanschluss 2 verbunden ist. Zwischen einer Wechselstromseite der Wechselrichterbrücke 8 und dem Netzanschluss 6 sind eine erste Schalteinheit 9 und eine zweite Schalteinheit 10 angeordnet. Die erste Schalteinheit 9 ist als ein monostabiler Schalter ausgestaltet, der normal offen ist. Das bedeutet, dass er ohne eine Ansteuerung in den offenen Zustand fällt. Wird er durch ein Ansteuersignal, z. B. einen Haltestrom, angesteuert, so schließt er, solange das Ansteuersignal, also z. B. der Haltestrom, anliegt. Die zweite Schalteinheit 10 ist als ein bistabiler Schalter ausgestaltet, bei dem sowohl der geöffnete Zustand als auch der geschlossene Zustand stabil sind, d. h. er bleibt auch ohne Ansteuerung in diesem Zustand. Durch ein Signal kann die zweite Schalteinheit 10 den Zustand wechseln.

Zwischen der ersten Schalteinheit 9 und der zweiten Schalteinheit 10 sind die Anschlusspunkte 11, 12 für den Lastanschluss 4 angeordnet. Auf jeweils einer der beiden Wechselstromleitungen ist dabei ein Anschlusspunkt 11, 12 vorgesehen. Die erste Schalteinheit 9 ist dabei zwischen der Wechselrichterbrücke 8 und den Anschlusspunkten 11, 12 angeordnet und die zweite Schalteinheit 10 ist zwischen den Anschlusspunkten 11, 12 und dem Netzanschluss 6 angeordnet. Der Wechselrichter 1 weist weiter eine Steuerung 13 auf, die die elektronischen Leistungsschalter der Wechselrichterbrücke 8 ansteuern kann. Die Steuerung 13 ist außerdem ausgelegt, ein oder mehrere Ansteuersignale zum Schalten der zweiten Schalteinheit 10 zu generieren und an die zweite Schalteinheit 10 zu übermitteln. In einer Ausführungsform kann die Steuerung 13 auch Konfigurationssignale für eine Ansteuerschaltung (nicht dargestellt) der zweiten Schalteinheit 10 generieren und an diese übermitteln.

In einer Ausführungsform weist der Wechselrichter zusätzlich einen Generatoranschluss zum Anschluss eines Generators zur Erzeugung von elektrischer Energie auf. Der Generatoranschluss (nicht gezeigt) kann direkt oder über einen DC-DC-Wandler angeschlossen sein, er kann z. B. mit der Gleichstromseite der Wechselrichterbrücke 8 verbunden sein, oder im Falle einer wechselstromseitigen Kopplung, z.B. an den Punkten 11, 12 angebunden sein.

In einer Ausführungsform kann der Wechselrichter 1 eine Netzüberwachungseinheit (nicht gezeigt) aufweisen. Die Netzüberwachungseinheit misst z. B. am Netzanschluss 6 oder außerhalb des Wechselrichters in der Nähe des Netzanschlusses 6 Netzparameter des übergeordneten Verteilnetzes 7. Über die Netzparameter kann ein Netzausfall, also ein Ausfall des übergeordneten Verteilnetzes 7 z. B. durch die Steuerung 13, ermittelt werden. In einer Ausführungsform weist der Wechselrichter 1 einen Anschluss für die Netzüberwachungseinheit auf. In dieser Ausführungsform kann die Netzüberwachungseinheit außerhalb des Wechselrichters 1 angeordnet sein.

Ist die erste Schalteinheit 9 und die zweite Schalteinheit 10 geöffnet, so ist das Verteilnetz 7 vom Wechselrichter 1 abgetrennt. Damit erfolgt keine Versorgung der angeschlossenen Lasten. Der Wechselrichter 1 ist spannungsfrei. Dies kann z.B. für Wartungsarbeiten ein angestrebter Zustand sein.

Ist die erste Schalteinheit 9 offen und die zweite Schalteinheit 10 geschlossen, so ist die Wechselrichterbrücke 8 getrennt von Verteilnetz 7, aber der Verbraucher 5 wird vom Verteilnetz 7 versorgt. In diesem Zustand befindet sich der Wechselrichter 1 z.B. im Energiesparmodus. Z. B. kann Energiespeicher 3 voll sein und es ist nicht nötig, aus dem Energiespeicher 3 den Verbraucher 5 zu versorgen. Oder der Energiespeicher 3 ist z. B. leer und soll nicht noch weiter entladen werden. Im Fall eines Generators, z. B. eines Photovoltaik-Generators (PV-Generators), der auf der Wechselstromseite der Wechselrichterbrücke 8 an den Anschlusspunkten 11, 12 angeschlossen ist, könnte noch zusätzlich ein Photovoltaik-Wechselrichter zwischen PV Generator und den Anschlusspunkten 11, 12 angeschlossen sein, der dann den Verbraucher 5, z. B. für den Eigenverbrauch, versorgt oder überschüssige Energie in das Verteilnetz 7 einspeist. Dieser Modus mit geöffneter erster Schalteinheit 9 und geschlossener zweiter Schalteinheit 10, z. B. als Energiesparmodus, kann die Energieeffizienz und durch verringerte Betriebszeit auch die Lebensdauer erhöhen. Für diesen Betrieb muss sichergestellt sein, dass die erste Schalteinheit 9 tatsächlich offen ist bevor der Wechselrichter 1 sich in den Energiesparmodus begibt und damit die Steuerfähigkeit für die zweite Schalteinheit 10 verliert und diese, da bistabil, dann in geschlossenem Zustand verbleibt. Der Wechselrichter 1 im Energiesparmodus kann z. B. bedeuten, dass sich die Wechselrichterbrücke 8 und die Steuerung 13 im Energiesparmodus befinden. Die Verbraucher 5 werden dann vom Verteilnetz 7 versorgt, zumindest solange dieses dazu in der Lage ist. Das System aus Wechselrichter 1 und Verbrauchern 5 kann sich damit aus Nutzersicht wie ein System ohne Speicher/Backup-Funktion verhalten. Wacht der Wechselrichter 1 aus dem Energiesparmodus wieder auf, so erlangt die Steuerung 13 Kontrolle über die erste Schalteinheit und die zweite Schalteinheit 10. Die Steuerung 13 kann dann die erforderlichen Zuschaltbedingungen überwachen und zur Versorgung des Verbrauchers 5 / der Verbraucher 5 mit elektrischer Energie die erste Schalteinheit 9 schließen. Fällt im Energiesparmodus des Wechselrichters 1 das Verteilnetz 7 aus, kann der Wechselrichter 1 auch z.B. durch eine externe Netzüberwachungseinheit (nicht dargestellt) aufgeweckt werden. Die Steuerung des Wechselrichters erhält dann Kontrolle über die erste und zweite Schalteinheit 9, 10. Die Steuerung 13 kann dann zunächst die zweite Schalteinheit 10 öffnen und zur Versorgung des Verbrauchers 5 über Batterie und/oder Generator die erste Schalteinheit 9 schließen.

Sind sowohl die erste Schalteinheit 9 und die zweite Schalteinheit 10 geschlossen, ist dies ein Betriebszustand, der über längere Zeiträume eingenommen wird und in dem die Wechselrichterbrücke 8 und der Verbraucher 5 mit dem Verteilnetz 7 verbunden sind. Die elektrische Speichereinheit 3 wird ge- oder entladen und die Verbraucher können aus Verteilnetz 7, elektrischer Speichereinheit 3 und/oder ggf. lokaler Erzeugung durch den Generator versorgt werden. Überschüssige Erzeugung durch den Generator kann entweder ins Verteilnetz 7 eingespeist werden oder dient der Ladung des Energiespeichers 3. Reicht die Erzeugung durch den Generator nicht aus, wird Energie aus dem Energiespeicher 3 und oder dem Verteilnetz 7 verwendet, um die Differenz zur benötigten Energie des Verbrauchers 5 auszugleichen. Dieser Zustand ist ein angestrebter Zustand von elektrischen Backup-Systemen. Es wird durch Wechselrichter 1 oder eine daran angeschlossene Netzüberwachungseinheit eine Netzüberwachung ausgeführt und bei Netzfehlern in den Backup-Betrieb umgeschaltet. Zum Umschalten von diesem Betriebszustand in den Backup-Betrieb wird die zweite Schalteinheit 10 geöffnet und somit der Verbraucher 5 sowie die Wechselrichterbrücke 8 vom Verteilnetz 7 getrennt.

Ist die erste Schalteinheit 9 geschlossen und die zweite Schalteinheit 10 geöffnet, so ist der Wechselrichter 1 im gerade beschriebenen Backup-Betrieb. Hier wird über die Wechselrichterbrücke 8 der Verbraucher 5 versorgt und dazu die Verbindung zum Verteilnetz 7 geöffnet, indem die zweite Schalteinheit 10 geöffnet wird. Hier muss nun sichergestellt werden, dass Schalter 10 nur dann geschlossen wird, wenn die entsprechenden Bedingungen für das Schließen vorliegen, mithin der Wechselrichter 1 die Steuerfähigkeit z. B. durch eine funktionierende Steuerung 13 sichergestellt hat. Wird die Netzwiederkehr erkannt, kann der Wechselrichter 1 unter Beachtung der Zuschaltbedingungen dann die zweite Schalteinheit 10 wieder schließen. Über die Steuerung 13 hat der Wechselrichter 1 die Kontrolle über die zweite Schalteinheit 10.

Die zweite Schalteinheit 10 ist in Betriebszuständen geschlossen, die große Zeiträume einnehmen können. Die vorliegende Vorrichtung ermöglich nun, durch die Ausgestaltung der zweiten Schalteinheit als bistabiler Schalter mit sehr geringem oder keinem Energieaufwand geschlossen zu halten und trotzdem im Fehlerfall ein Öffnen der zweiten Schalteinheit 10 sicherzustellen.

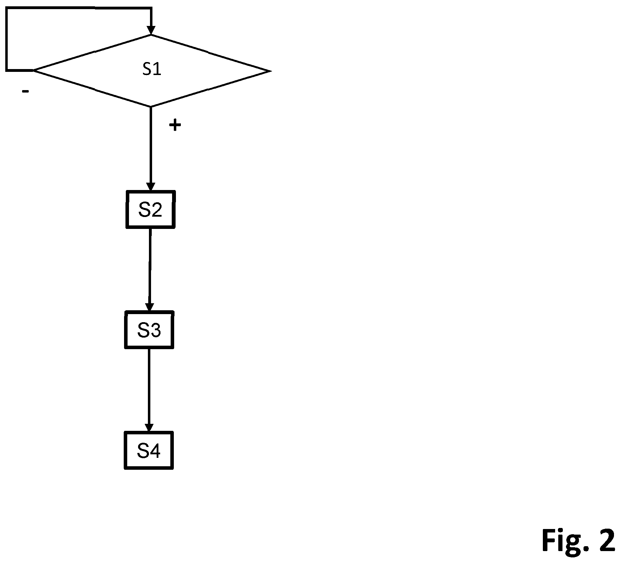

Fig. 2 zeigt schematisch ein Verfahren zur Versorgung zumindest des Verbrauchers 5 mit elektrischer Energie. Der Verbraucher 5 ist an den Lastanschluss 4 des zuvor beschriebenen Wechselrichters 1 angeschlossen.

In Schritt S1 detektiert eine Netzüberwachungseinheit den Zustand des an dem Netzanschluss 6 angeschlossenen übergeordneten Verteilnetzes 7 und meldet in Schritt S2 einen Ausfall - Zweig "ja" - an die Steuerung 13 des Wechselrichters 1. Wird kein Ausfall detektiert wird die Überwachung fortgesetzt - Zweig "nein". Ein Ausfall bedeutet in diesem Zusammenhang eine so weitgehende Beeinträchtigung von Netzparametern, dass eine sichere Versorgung des Verbrauchers 5 nicht mehr gewährleistet ist.

Bei Ausfall des übergeordneten Verteilnetzes 7 generiert die Steuerung 13 in Schritt S3 ein Signal zur Umschaltung der zweiten Schalteinheit 10 in den geöffneten Zustand. In Schritt S4 wird die zweite Schalteinheit 10 dann geöffnet.

Anschließend baut die bidirektionale Wechselrichterbrücke 8 ein lokales Inselnetz auf und der zumindest eine an den Lastanschluss 4 angeschlossene Verbraucher 5 wird mit elektrischer Energie versorgt.

### BEZUGSZEICHENLISTE

- 1: Wechselrichter
- 2: Batterieanschluss
- 3: Speichereinheit
- 4: Lastanschluss
- 5: Verbraucher
- 6: Netzanschluss
- 7: Verteilnetz
- 8: Wechselrichterbrücke
- 9: erste Schalteinheit
- 10: zweite Schalteinheit
- 11, 12: Anschlusspunkt
- 13: Steuerung

## Patentansprüche

1. Wechselrichter (1) umfassend
• einen Batterieanschluss (2) zum Anschluss einer elektrischen Speichereinheit (3),
• einen Lastanschluss (4) zum Anschluss zumindest eines Verbrauchers (5) von elektrischer Energie,
• einen Netzanschluss (6) zur Verbindung mit einem übergeordneten Verteilnetz (7),
• eine bidirektionale Wechselrichterbrücke (8) verbunden mit dem Batterieanschluss (2), und
• eine Reihenschaltung aus einer ersten Schalteinheit (9) und einer zweiten Schalteinheit (10),
wobei die erste Schalteinheit (9) zwischen der bidirektionalen Wechselrichterbrücke (8) und der zweiten Schalteinheit (10) angeordnet ist und die zweite Schalteinheit (10) zwischen der ersten Schalteinheit (9) und dem Netzanschluss (6) angeordnet ist, **dadurch gekennzeichnet, dass**
die erste Schalteinheit (9) eingerichtet ist, ohne einen Haltestrom in einen ersten Zustand zu fallen und mit Haltestrom in einen zweiten Zustand zu schalten, und
die zweite Schalteinheit (10) mehrere stabile Zustände besitzt und eingerichtet ist, durch ein Signal von einem Zustand in einen anderen Zustand der mehreren stabilen Zustände umgeschaltet zu werden, wobei die erste Schalteinheit (9) im ersten Zustand geöffnet ist und im zweiten Zustand geschlossen ist und die zweite Schalteinheit (10) als bistabile Schalteinheit ausgeführt ist, die ohne Signal in einem vorherigen Zustand verbleibt, und wobei der Lastanschluss (4) mit Anschlusspunkten (11, 12) verbunden ist, die zwischen der ersten Schalteinheit (9) und der zweiten Schalteinheit (10) angeordnet sind.

2. Wechselrichter (1) nach Anspruch 1, ferner umfassend eine Steuerung (13), die eingerichtet ist, das Signal zur Umschaltung der zweiten Schalteinheit (10) zu generieren.

3. Wechselrichter (1) nach Anspruch 2, ferner umfassend eine Netzüberwachungseinheit oder eine Schnittstelle zum Anschluss einer Netzüberwachungseinheit, wobei die Steuerung (13) eingerichtet ist, mit der Netzüberwachungseinheit in kommunikativer Verbindung zu stehen, und von der Netzüberwachungseinheit Netzparameter des übergeordneten Verteilnetzes (7) zu empfangen.

4. Wechselrichter (1) nach Anspruch 3, wobei die Steuerung (13) eingerichtet ist, bei Ausfall des übergeordneten Verteilnetzes (7), detektiert durch von der Netzüberwachungseinheit empfangene Netzparameter, das Signal zur Umschaltung der zweiten Schalteinheit (10) in den geöffneten Zustand zu generieren.

5. Wechselrichter (1) nach einem der Ansprüche 2 bis 4, wobei die Steuerung (13) eingerichtet ist, ein Lebenszeichensignal bereitzustellen und an die zweite Schalteinheit (10) zu senden, wodurch der zweiten Schalteinheit (10) mitgeteilt wird, dass die Steuerung (13) in Ordnung ist und korrekt funktioniert.

6. Wechselrichter (1) nach Anspruch 5, wobei die zweite Schalteinheit (10) eingerichtet ist, in den geschlossenen Zustand zu schalten, wenn sie das Lebenszeichensignal erhält, wobei die zweite Schalteinheit (10) insbesondere eingerichtet ist, nur dann in den geschlossenen Zustand zu schalten, wenn sie das Lebenszeichensignal erhält.

7. Wechselrichter (1) nach einem der vorhergehenden Ansprüche, wobei die zweite Schalteinheit (10) eine Ansteuerschaltung umfasst, die eingerichtet ist, Konfigurationssignale zu empfangen.

8. Wechselrichter (1) nach Anspruch 7, wobei die Steuerung (13) eingerichtet ist, die Konfigurationssignale an die Ansteuerschaltung zu senden, wobei durch die Konfigurationssignale einer der folgenden Zustände ausgelöst wird:
• die zweite Schalteinheit (10) verbleibt im geschlossenen Zustand
• die zweite Schalteinheit (10) verbleibt im geöffneten Zustand, und
• sofern die Steuerung (13) eingerichtet ist, ein Lebenszeichensignal bereitzustellen und an die zweite Schalteinheit (10) zu senden, die zweite Schalteinheit (10) schaltet in den geöffneten Zustand, wenn sie kein Lebenszeichensignal erhält.

9. Wechselrichter (1) nach einem der vorhergehenden Ansprüche, zusätzlich aufweisend einen Generatoranschluss zum Anschluss eines Generators zur Erzeugung von elektrischer Energie.

10. Verfahren zur Versorgung zumindest eines Verbrauchers (5), angeschlossen an einen Lastanschluss (4) eines Wechselrichters (1) nach einem der vorhergehenden Ansprüche, mit elektrischer Energie, wobei
• eine Netzüberwachungseinheit den Zustand des an dem Netzanschluss (6) angeschlossenen übergeordneten Verteilnetzes (7) detektiert und einen Ausfall an die Steuerung (13) des Wechselrichters (1) meldet,
• und bei Ausfall des übergeordneten Verteilnetzes (7):
• die Steuerung (13) ein Signal zur Umschaltung der zweiten Schalteinheit (10) in den geöffneten Zustand generiert,
• die zweite Schalteinheit (10) geöffnet wird.

11. Verfahren nach Anspruch 10, wobei bei Ausfall des übergeordneten Verteilnetzes (7):
• die bidirektionale Wechselrichterbrücke (8) ein lokales Inselnetz aufbaut und
• der zumindest eine an den Lastanschluss (4) angeschlossene Verbraucher (5) mit elektrischer Energie versorgt wird.

12. Verfahren nach Anspruch 11, wobei der Verbraucher (5) aus einer am Batterieanschluss (2) angeschlossen elektrischen Speichereinheit (3) und/oder aus einem am Generatoranschluss eines Wechselrichters nach Anspruch 9 angeschlossenen Generator mit elektrischer Energie versorgt wird.

## Claims

1. An inverter (1) comprising
• a battery terminal (2) for connecting an electrical storage unit (3),
• a load terminal (4) for connecting at least one electrical-energy consumer (5),
• a grid terminal (6) for connection to a superordinate distribution grid (7),
• a bidirectional inverter bridge (8) connected to the battery terminal (2),
• a series circuit of a first switching unit (9) and a second switching unit (10),
wherein the first switching unit (9) is arranged between the bidirectional inverter bridge (8) and the second switching unit (10), and the second switching unit (10) is arranged between the first switching unit (9) and the grid terminal (6),
**characterized in that**
the first switching unit (9) is configured to fall into a first state without a holding current and to switch into a second state with a holding current, and
the second switching unit (10)has multiple stable states and is configured to be switched from one state to another of the multiple stable states by a signal, wherein the first switching unit (9) is open in the first state and closed in the second state, and the second switching unit (10) is designed as a bistable switching unit that remains in a previous state in the absence of a signal, and wherein the load terminal (4) is connected to connection points (11, 12) located between the first switching unit (9) and the second switching unit (10).

2. The inverter (1) as claimed in claim 1, further comprising a controller (13) configured to generate the signal for switching over the second switching unit (10).

3. The inverter (1) as claimed in claim 2, further comprising a grid monitoring unit or an interface for connecting a grid monitoring unit, the controller (13) being configured to be communicatively connected to the grid monitoring unit, and to receive grid parameters of the superordinate distribution grid (7) from the grid monitoring unit.

4. The inverter (1) as claimed in claim 3, wherein the controller (13) is configured to generate the signal for switching over the second switching unit (10) to the open state should a failure of the superordinate distribution grid (7) be detected by grid parameters received from the grid monitoring unit.

5. The inverter (1) as claimed in any one of claims 2 to 4, wherein the controller (13) is configured to provide a sign-of-life signal and transmit the latter to the second switching unit (10), thereby informing the second switching unit (10) that the controller (13) is in good working order and functioning correctly.

6. The inverter (1) as claimed in claim 5, wherein the second switching unit (10) is configured to switch into the closed state when it receives the sign-of-life signal, in particular the second switching unit (10) is configured to switch into the closed state only when it receives the sign-of-life signal.

7. The inverter (1) as claimed in any one of the preceding claims, wherein the second switching unit (10) comprises a control circuit which is configured to receive configuration signals.

8. The inverter (1) as claimed in claim 7, wherein the controller (13) is configured to transmit the configuration signals to the control circuit, the configuration signals triggering one of the following states:
• the second switching unit (10) remains in the closed state,
• the second switching unit (10) remains in the open state,
• provided that the controller (13) is configured to provide and transmit a sign-of-life signal to the second switching unit (10),the second switching unit (10) switches to the open state if it does not receive a sign-of-life signal.

9. The inverter (1) as claimed in any one of the preceding claims, additionally comprising a generator terminal for connecting a generator for producing electrical energy.

10. A method for supplying electrical energy to at least one consumer (5) connected to a load terminal (4) of an inverter (1) as claimed in any one of the preceding claims, wherein
• a grid monitoring unit detects the state of the superordinate distribution grid (7) connected to the grid terminal (6) and reports a failure to the controller (13) of the inverter (1),
• and in the event of failure of the superordinate distribution grid (7):
• the controller (13) generates a signal to switch over the second switching unit (10) into the open state,
• the second switching unit (10) is opened.

11. The method as claimed in claim 10, wherein in the event of failure of the superordinate distribution grid (7):
• the bidirectional inverter bridge (8) establishes a local island grid and
• the at least one consumer (5) connected to the load terminal (4) is supplied with electrical energy.

12. The method as claimed in claim 11, wherein the consumer (5) is supplied with electrical energy from an electrical storage unit (3) connected to the battery terminal (2) and/or from a generator of an inverter according to claim 9 connected to the generator terminal.

## Revendications

1. Onduleur (1) comprenant
· une raccordement de batterie (2) destinée au raccordement d'une unité de stockage d'énergie électrique (3),
· une raccordeent de charge (4) destinée au raccordement d'au moins un consommateur (5) d'énergie électrique,
· une raccordement de réseau (6) destinée à la connexion à un réseau de distribution de niveau supérieur (7),
· un pont onduleur bidirectionnel (8) relié à la raccordement de batterie (2), et
· un montage en série composé d'une première unité de commutation (9) et d'une deuxième unité de commutation (10),
la première unité de commutation (9) étant disposée entre le pont onduleur bidirectionnel (8) et la deuxième unité de commutation (10), et la deuxième unité de commutation (10) étant disposée entre la première unité de commutation (9) et le raccordement au réseau (6),
**caractérisé en ce que**
la première unité de commutation (9) est conçue pour retomber dans un premier état sans courant de maintien et dans un deuxième état avec courant de maintien, et
la deuxième unité de commutation (10) possède plusieurs états stables et est conçue pour être commutée, par un signal, d'un état à un autre parmi lesdits plusieurs états stables, la première unité de commutation (9) est ouverte dans le premier état et fermée dans le deuxième état, et la deuxième unité de commutation (10) est réalisée sous la forme d'une unité de commutation bistable qui, en l'absence de signal, reste dans un état précédent, et dans lequel la raccordement de charge (4) est reliée à des points de connexion (11, 12) situés entre la première unité de commutation (9) et la deuxième unité de commutation (10).

2. Onduleur (1) selon la revendication 1, comprenant en outre une commande (13) agencée pour générer le signal de commutation de la deuxième unité de commutation (10).

3. Onduleur (1) selon la revendication 2, comprenant en outre une unité de surveillance du réseau ou une interface pour le raccordement d'une unité de surveillance du réseau, la commande (13) étant agencée pour être en communication avec l'unité de surveillance du réseau et pour recevoir de celle-ci des paramètres du réseau de distribution de niveau supérieur (7).

4. Onduleur (1) selon la revendication 3, dans lequel la commande (13) est agencée pour générer, en cas de défaillance du réseau de distribution de niveau supérieur (7) détectée par les paramètres du réseau reçus de l'unité de surveillance du réseau, le signal permettant de commuter la deuxième unité de commutation (10) à l'état ouvert.

5. Onduleur (1) selon l'une des revendications 2 à 4, dans lequel la commande (13) est agencée pour fournir un signal de vie et l'envoyer à la deuxième unité de commutation (10), ce qui indique à la deuxième unité de commutation (10) que la commande (13) est en bon état et fonctionne correctement.

6. Onduleur (1) selon la revendication 5, dans lequel la deuxième unité de commutation (10) est agencée pour passer à l'état fermé lorsqu'elle reçoit le signal de vie, la deuxième unité de commutation (10) étant notamment agencée pour passer à l'état fermé uniquement lorsqu'elle reçoit le signal de vie.

7. Onduleur (1) selon l'une des revendications précédentes, dans lequel la deuxième unité de commutation (10) comprend un circuit de commande agencé pour recevoir des signaux de configuration.

8. Onduleur (1) selon la revendication 7, dans lequel la commande (13) est agencé pour envoyer les signaux de configuration au circuit de commande, les signaux de configuration déclenchant l'un des états suivants:
· la deuxième unité de commutation (10) reste à l'état fermé
· la deuxième unité de commutation (10) reste à l'état ouvert, et
· dans la mesure où la commande (13) est agencée pour fournir un signal de vie et pour l'envoyer à la deuxième unité de commutation (10), la deuxième unité de commutation (10) passe à l'état ouvert lorsqu'elle ne reçoit pas de signal de vie.

9. Onduleur (1) selon l'une des revendications précédentes, comportant en outre un raccordement de générateur destiné à raccorder un générateur pour produire de l'énergie électrique.

10. Procédé d'alimentation en énergie électrique d'au moins un consommateur (5), raccordé à un raccordement de charge (4) d'un onduleur (1) selon l'une des revendications précédentes, dans lequel
· une unité de surveillance du réseau détecte l'état du réseau de distribution supérieur (7) raccordé au raccordement au réseau (6) et signale une panne à la commande (13) de l'onduleur (1),
· et en cas de panne du réseau de distribution supérieur (7) :
· la commande (13) génère un signal pour commuter la deuxième unité de commutation (10) à l'état ouvert,
· la deuxième unité de commutation (10) est ouverte.

11. Procédé selon la revendication 10, dans lequel, en cas de panne du réseau de distribution de niveau supérieur (7) :
· le pont onduleur bidirectionnel (8) établit un réseau en îloté local et
· le ou les consommateurs (5) raccordés au raccordement de charge (4) sont alimentés en énergie électrique.

12. Procédé selon la revendication 11, dans lequel le consommateur (5) est alimenté en énergie électrique par une unité de stockage électrique (3) raccordée à la raccordement de batterie (2) et/ou par un générateur raccordé à la raccorement de générateur d'un onduleur selon la revendication 9.
